# EUROPÄISCHE PATENTSCHRIFT

(11) **EP 2 348 374 B1**
(45) Veröffentlichungstag und Bekanntmachung des Hinweises auf die Patenterteilung: **28.11.2012**
(21) Anmeldenummer: 10150968.5
(22) Anmeldetag: 18.01.2010
(51) Int. Cl.: G05B 19/418, H04L 12/26, H04L 12/40, H04L 29/12

(54) **Verfahren zum Erkennen einer fehlerhaften Mehrfachadressierung eines nach dem Master-Slave-Prinzip arbeitenden Netzwerks und ein entsprechendes Aktuator-Sensor-Interface-Netzwerk**
Method for recognising incorrect multiple addressing of a network operating according to the master-slave principle and a corresponding actuator-sensor interface network
Procédé de détection d'un adressage multiple défectueux d'un réseau fonctionnant selon le principe maître-esclave et un réseau à interface de capteur d'actionneur correspondant

(43) Veröffentlichungstag der Anmeldung: 27.07.2011
(73) Patentinhaber: SIEMENS AKTIENGESELLSCHAFT, 80333 München (DE)
(72) Erfinder: Griepentrog, Gerd, Dr., 91468 Gutenstetten (DE); Wiesgickl, Bernhard, 92249 Vilseck (DE)

(56) Entgegenhaltungen:
- EP-A2- 1 312 991
- EP-A2- 2 000 866
- DE-A1- 10 134 538
- DE-A1- 19 909 091
- DE-A1-102004 030 767

## Beschreibung

Verfahren zum Erkennen einer fehlerhaften Mehrfachadressierung eines nach dem Master-Slave-Prinzip arbeitenden Netzwerks und ein entsprechendes Aktuator-Sensor-Interface-Netzwerk

Die Erfindung betrifft ein Verfahren gemäß dem Oberbegriff des Anspruchs 1 sowie ein Aktuator-Sensor-Interface-Netzwerk nach Anspruch 9.

Ein Aktuator-Sensor-Interface (AS-Interface, AS-i)-Netzwerk ist ein Kommunikationsnetz auf der untersten Feldebene eines Automatisierungssystems. Mittels entsprechender AS-Interface-Leitungen, über die sowohl Energie zur Spannungsversorgung als auch aufmodulierte Daten übertragen werden, werden so Sensoren und Aktuatoren mit einer übergeordneten Steuereinheit verbunden. An die Leitung ist ein AS-i-Netzteil zur Gleichspannungsversorgung und mit Datenentkopplung zur Trennung der aufmodulierten Daten angeschlossen.

Die Kommunikation zwischen der Steuereinheit und den Sensoren bzw. Aktuatoren erfolgt nach dem Master-Slave-Prinzip. Der Master bildet die Schnittstelle zur übergeordneten Automatisierungsebene, um so die Sensoren und Aktuatoren zu steuern. Die vom Master gesteuerte Kommunikation erfolgt dabei seriell zwischen diesem und den Sensoren bzw. Aktuatoren als Slaves. Für diese Art der Kommunikation mit einem Masteraufruf und einer auf diesen Masteraufruf folgende Slaveantwort muss jedem Teilnehmer vor Inbetriebnahme des AS-Interface-Netzes eine eindeutige Adresse zugewiesen werden. Hierzu stehen beispielsweise spezielle Adressiergeräte zur Verfügung.

Wurde nun versehentlich zwei oder mehreren Slaves die gleiche Adresse zugewiesen, werden auf einen Masteraufruf mit dieser Adresse nun gleichzeitig mehrere Slaves antworten, was zu einem Fehler in der Kommunikation führt. Diesen instabilen Zustand der Kommunikation im Automatisierungssystem gilt es zu vermeiden.

Aus der DE 102 53 566 A1 ist ein AS-Interface-System sowie ein Verfahren zum Betreiben eines solchen bekannt, bei dem die Amplitude des auf die AS-i-Leitung aufmodulierten Sendestroms ermittelt wird und anhand der Amplitude festgestellt wird, ob diese durch einen oder vielleicht mehrere Slaves hervorgerufen wurde. Dies hat aber den Nachteil, dass ein solches Erkennungsverfahren direkt an der Datenentkopplung stattfinden muss.

Aus der DE 10 2007 025 852 B3 ist eine Überwachungseinrichtung zur Erkennung einer fehlerhaften Adressierung eines AS-Interface-Slaves bekannt, bei der die Ermittlung einer möglichen Doppeladressierung durch Messen des Sendestroms mittels einer zusätzlichen Impedanzschaltung erfolgt. Diese ist dabei so ausgebildet, dass ihre Impedanz an die Impedanz des AS-i-Netzteils angepasst ist, so dass der durch die Impedanzschaltung der Überwachungseinrichtung fließende Strom proportional zu dem aufmodulierten Strom ist und so anhand der Stromamplitude eine Mehrfachadressierung erkannt werden kann. Dies hat aber den Nachteil, dass eine solche Überwachungseinrichtung aber relativ aufwändig ausgestaltet ist.

Die DE 199 09 091 A1 beschreibt ein Bussystem mit verbesserter Datenübertragungssicherheit. Bei diesem Bussystem wird mit einem Master mit mehreren Slaves, die durch eine Busleitung miteinander verbunden sind, wobei zwischen dem Master und den Slaves mindestens ein Repeater zwischengeschaltet ist, eine Überwachungseinheit an die Busleitung angeschlossen, die die Reaktionszeiten zwischen dem Aussenden eines Masteraufrufs und dem Empfang einer Slave-Antwort erfasst und auswertet.

Aus der EP 2 000 866 A2 geht eine Überwachungseinrichtung zur Erkennung eines Zustandes eine Busses hervor, insbesondere zur Erkennung einer fehlerhaften Adressierung eines Slaves in einem einen Master, mehreren Slaves, ein Netzteil und einen Signale und Energie übertragenen Bus aufweisenden Feldbus-System mit einer Spannungserfassungseinrichtung, mit einer Impedanzschaltung und mit einer Auswerteeinheit. Die Spannungserfassungseinrichtung weist einen Busanschluss zum Anschluss an den Bus auf und greift die zwischen den beiden Leitern des Busses anstehende Modulationsspannung rückwirkungsfrei ab. Die Impedanzschaltung ist derart ausgebildet, dass ihre Impedanz an die Impedanz des Netzteils angepasst ist, und die Auswerteeinheit wertet den mit Hilfe der Impedanzschaltung ermittelten Strom aus.

Aufgabe der Erfindung ist es, ein Verfahren sowie ein Aktuator-Sensor-Interface-Netzwerk zur Verfügung zu stellen, das die zuvor beschriebenen Nachteile überwindet.

Diese Aufgabe wird mit dem Verfahren mit den Merkmalen des Anspruchs 1 sowie durch ein entsprechendes Aktuator-Sensor-Interface-Netzwerk mit den Merkmalen des Anspruchs 9 gelöst.

Durch die Einführung eines Schwellwertes, der aus dem durch den Masteraufruf des Masters generierten Spannungsimpuls (als Referenz) und einer zuvor erfolgten Simulation oder Messung aller Ausprägungen des Netzwerks (netzwerkspezifische Eigenschaften) abgeleitet wird, können nun auch netzwerkspezifische Einflüsse an jedem Ort des Netzwerkes berücksichtigt werden. Damit können im Gegensatz zu den bekannten Lösungsverfahren zur Erkennung einer fehlerhaften Mehrfachadressierung ohne weiteren Aufwand nun auch direkt die Spannungsimpulse statt der Stromimpulse genutzt werden. Zudem erlaubt das erfindungsgemäße Verfahren, dass die Überwachung einer Mehrfachadressierung an jeder beliebigen Stelle im Aktuator-Sensor-Interface-Netzwerk durchgeführt werden kann. Somit können Spannungsimpulse von Slaveantworten ohne Mehrfachadressierung eindeutig von solchen Spannungsimpulsen, die durch Mehrfachadressierung erzeugt werden, unterschieden werden, weil zu jedem Ort ein auf das Netzwerk normierter Vergleichswert vorliegt. Das erfindungsgemäße Verfahren erlaubt somit auf einfache Art und Weise die Erkennung einer Doppeladressierung anhand der originären Spannungsimpulse auf der AS-i-Leitung.

Das erfindungsgemäße Verfahren ist dabei besonders schnell, wenn sowohl bei dem ersten durch den Masteraufruf generierten Spannungsimpuls als auch bei dem weiteren durch die Slaveantwort generierten Spannungsimpuls ein Spannungsspitzenwert oder Effektivwert gemessen wird.

Wird dagegen sowohl über die durch den Masteraufruf generierten Spannungsimpulse als auch über die weiteren durch die Slaveantwort generierten Spannungsimpulse ein Mittelwert gemessen, so wird das erfindungsgemäße Verfahren dagegen weniger störanfällig. Vorzugsweise kann diese Mittelung über alle derzeit festgelegten sieben bzw. 14 Stromimpulse eines Masteraufrufs bzw. einer Slaveantwort erfolgen.

Die Störfestigkeit kann noch weiter erhöht werden, wenn der Mittelwert über mehrere Spannungsimpulse mehrerer aufeinander folgender Masteraufrufe und/oder Slaveantworten gemessen wird. Insbesondere kann so die Gefahr einer Störung des Detektionsverfahrens durch elektromagnetische Störungen vermindert werden.

Wird dagegen der Schwellwert bei jedem Masteraufruf neu ermittelt, können Topologieveränderungen des AS-i-Netzwerkes im laufenden Betrieb erkannt und berücksichtigt werden. Dies ist besonders dann von Vorteil, wenn sich z.B. während der Inbetriebnahme, Erweiterung oder im Betrieb die Topologie häufig bzw. kontinuierlich ändert.

Besonders schnelle Zugriffszeiten ergeben sich, wenn die Ableitung des Schwellwertes anhand einer Look-Up-Tabelle erfolgt. D.h., zu jedem möglichen Spannungsimpulswert eines durch einen Masteraufruf erzeugten Spannungsimpulses an einem Ort des Netzwerkes sind die für das Netzwerk simulierten oder gemessenen Ausprägungen des Netzwerks hinterlegt und können abgefragt werden, um so den Schwellwert für diesen Spannungsimpuls abzuleiten.

Alternativ kann die Ableitung des Schwellwertes auch durch eine Näherungsfunktion erfolgen, die das Netzwerk mathematisch beschreibt.

Idealerweise erfolgt gleichzeitig mit der Überwachung auch eine Meldung einer erkannten Mehrfachadressierung über die Steuerung an den Anwender. Wenn zudem mit der Meldung auch die Adresse des angesprochenen Slaves weitergegeben wird, ist eine einfache Lokalisierung der Fehlerstelle, d.h. der Slaves mit identischen Adressen, möglich.

Besonders vorteilhaft ist, wenn sich der Messort am Ort des Masters befindet, weil dann die Meldung ohne weitere und damit aufwändige Maßnahmen dem Master direkt zur Weiterverarbeitung oder Weitergabe an die übergeordnete Steuerung zur Verfügung steht.

Das erfindungsgemäße Aktuator-Sensor-Interface-Netzwerk umfasst einen Master und eine Anzahl von über eine Aktuator-Sensor-Interface-Leitung mit dem Master verbundene Slaves, die jeweils einem oder einer Gruppe von Aktuatoren und/oder Sensoren zugeordnet sind und die in Abhängigkeit von ihrer Adressierung vom Master angesprochen werden, wobei an einem Ort der Aktuator-Sensor-Interface-Leitung eine Überwachungsvorrichtung vorgesehen ist, die eine nicht erlaubte Zuordnung zumindest zweier Slaves zu einer Adresse im Aktuator-Sensor-Interface-Netzwerk nach dem erfindungsgemäßen Verfahren erkennt. Dadurch kann die Erkennung und ggf. die Meldung einer fehlerhaften Doppeladressierung auf einfachste Art und Weise an der Stelle durchgeführt werden, an der sie benötigt wird.

Die Erfindung soll nun anhand der nachfolgenden Figuren beispielhaft erläutert werden. Es zeigen:
- FIG 1: schematisch ein AS-i-Netzwerk mit der erfindungsgemäßen Vorrichtung,
- FIG 2: schematisch ein Ablaufdiagramm des erfindungsgemäßen Verfahrens,
- FIG 3,4: beispielhaft eine mögliche Beziehung zwischen Spannungsimpulswert und Schwellwert.

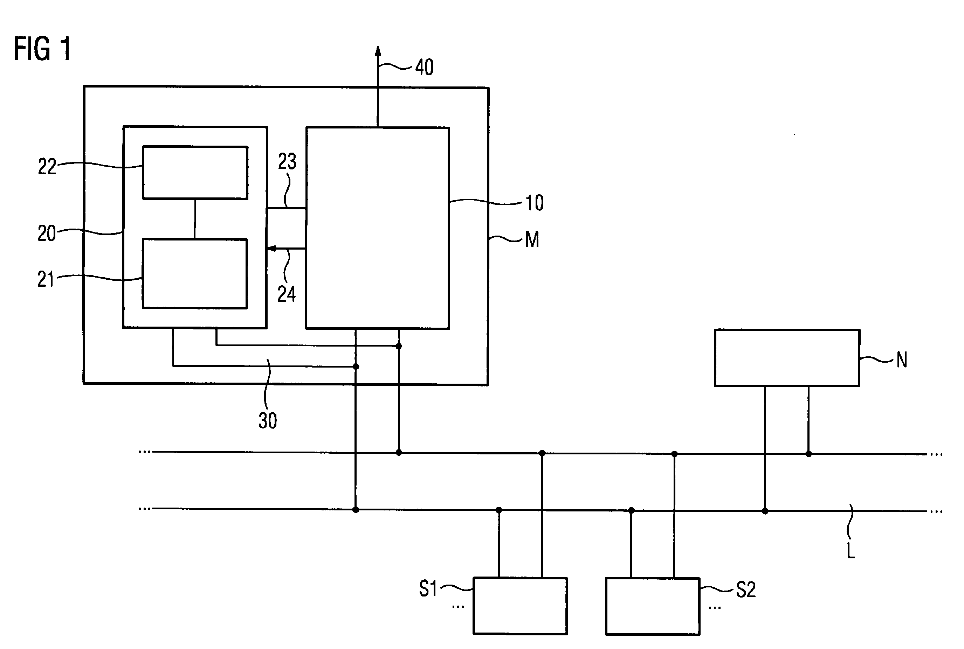

Dargestellt ist in FIG 1 eine bevorzugte Anordnung einer Überwachungseinrichtung 20 für das erfindungsgemäße Verfahren zum Erkennen einer Mehrfachadressierung im Master des AS-i-Netzwerkes. Das in FIG 1 aufgezeigte AS-i-Netzwerk zeigt schematisch zwei Slaves S1 und S2, die jeweils über Zweidrahtleitungen an den AS-i-Bus L angeschlossen sind. Dieser AS-i-Bus ist standardisiert und besteht selbst aus einer Zweidrahtleitung, die durch ein angeschlossenes AS-i-Netzteil N mit integrierter Datenentkopplung mit einer definierten Gleichspannung zur Spannungsversorgung beaufschlagt wird. An die AS-i-Leitung L ist zudem ein Master M angeschlossen, der als Kommunikationsschnittstelle der Slaves mit der übergeordneten Steuerung 40 dient. Dabei kommuniziert der Master über die AS-i-Leitung L seriell mit den angeschlossenen Slaves S1 und S2 entsprechend den in den AS-i-Spezifikationen festgelegten Regeln. Die Kommunikation erfolgt mittels alternierender Pulsmodulation, die der Gleichspannungsversorgung auf der AS-i-Leitung überlagert wird. Dazu wird das Sendesignal zuerst in eine nach dem Manchester-Code kodierte Bitfolge umgewandelt. Aus dieser Bitfolge wird dann ein Sendestrom erzeugt, der durch Differentiation in der Datenentkopplung in Spannungsimpulse auf der AS-i-Leitung L umgewandelt wird. In den als Masteraufrufe bezeichneten Zeitabschnitten werden so Informationen vom Master M in die AS-i-Leitung L eingespeist. In diesem Informationspaket ist auch die Adresse des Slaves (z.B. S1) enthalten, der vom Master angesprochen werden soll. Dieser angesprochene Slave S1 übersendet dann als Antwort auf den Masteraufruf Informationen, beispielsweise über seinen Zustand oder Status, als so genannte Slaveantwort an den Master M zurück. Anschließend spricht der Master in einem erneuten Masteraufruf den Salve S2 an und dieser sendet eine Slaveantwort an den Master M zurück. Dadurch wird eine serielle Kommunikation zwischen dem Master M und den über die AS-i-Leitung angebundenen Slaves S1, S2 usw. erreicht.

Kommt es jetzt fälschlicherweise zu einer Adressierung mehrerer Slaves mit der gleichen Adresse, so wird diese serielle Kommunikation gestört, weil auf einen Masteraufruf dann nicht genau ein Slave, sondern zwei oder ggf. sogar mehrere Slaves mit der gleichen Adresse gleichzeitig antworten. Erfindungsgemäß ist daher eine Überwachungseinrichtung vorgesehen, die diesen nicht gewollten Zustand in der Kommunikation erkennt. Dazu ist beispielsweise wie in FIG 1 angedeutet, eine Überwachungseinrichtung 20 am Ort des Masters M - hier im Master selbst - vorgesehen, in der das erfindungsgemäße Verfahren durchgeführt wird.

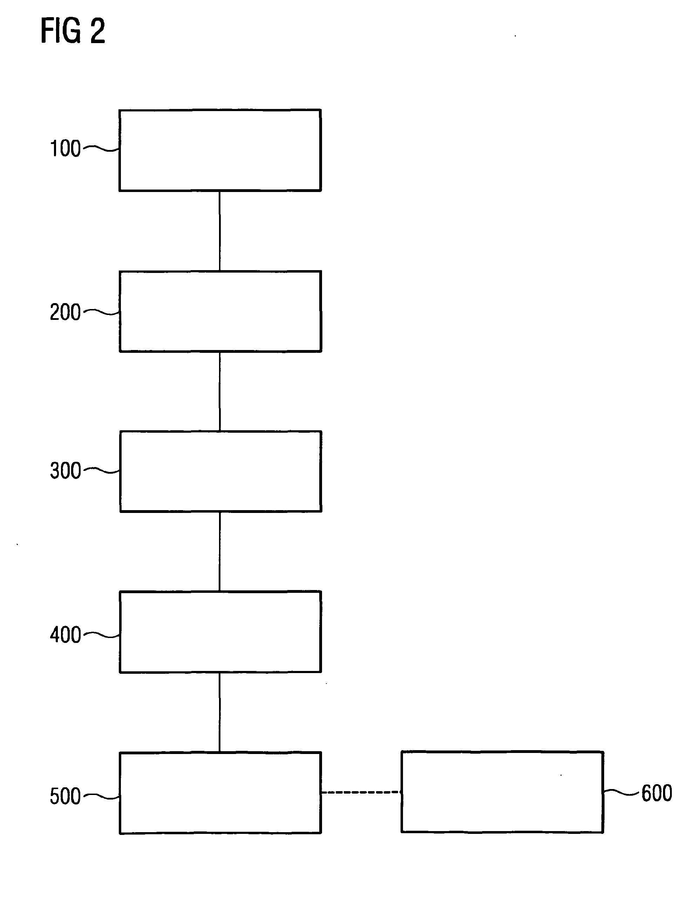

Die einzelnen Schritte des erfindungsgemäßen Verfahrens sind schematisch in FIG 2 dargestellt. In einem ersten Schritt 100 wird zumindest ein erster, durch einen Masteraufruf des Masters M generierter Spannungsimpuls an einem Messort der Leitung gemessen. Dies kann der Spitzenwert oder aber auch der Effektivwert dieses Spannungsimpulses sein. In der in FIG 1 gezeigten Ausführung erfolgt die Messung im Master M selbst. Dazu wird das AS-i-Signal am Eingang des Masters M abgegriffen und über 30 der Überwachungseinrichtung 20 zugeführt. In einem zweiten Schritt 200 wird dann anhand der in der Look-Up-Tabelle 22 hinterlegten Zuordnung für diesen Spannungsimpuls des Masteraufrufs ein Schwellwert abgeleitet. In einem nächsten Schritt 300 wird sodann ein erster weiterer, durch eine auf den Masteraufruf folgende Slaveantwort generierter Spannungsimpuls gemessen und dieser anschließend im Schritt 400 mit dem zuvor festgelegten Schwellwert verglichen. Anhand dieses Vergleichs kann dann eine fehlerhafte Mehrfachadressierung erkannt werden, indem in einem letzten Schritt 500 ermittelt wird, ob der Spitzenwert bzw. der Effektivwert dieses weiteren Spannungsimpulses der Slaveantwort oberhalb oder unterhalb des dem Spannungsimpuls des Masteraufrufs zugeordneten Schwellwertes liegt. Liegt der Wert des Spannungsimpulses oberhalb des Schwellwertes, wird von einer Mehrfachadressierung ausgegangen, und diese Erkenntnis kann dann in einem weiteren Schritt 600 von der Überwachungseinrichtung 20 über 23 zum Mikrocontroller (CPU) 10 des Masters M und von diesem zur übergeordneten Steuerung 40 gemeldet werden.

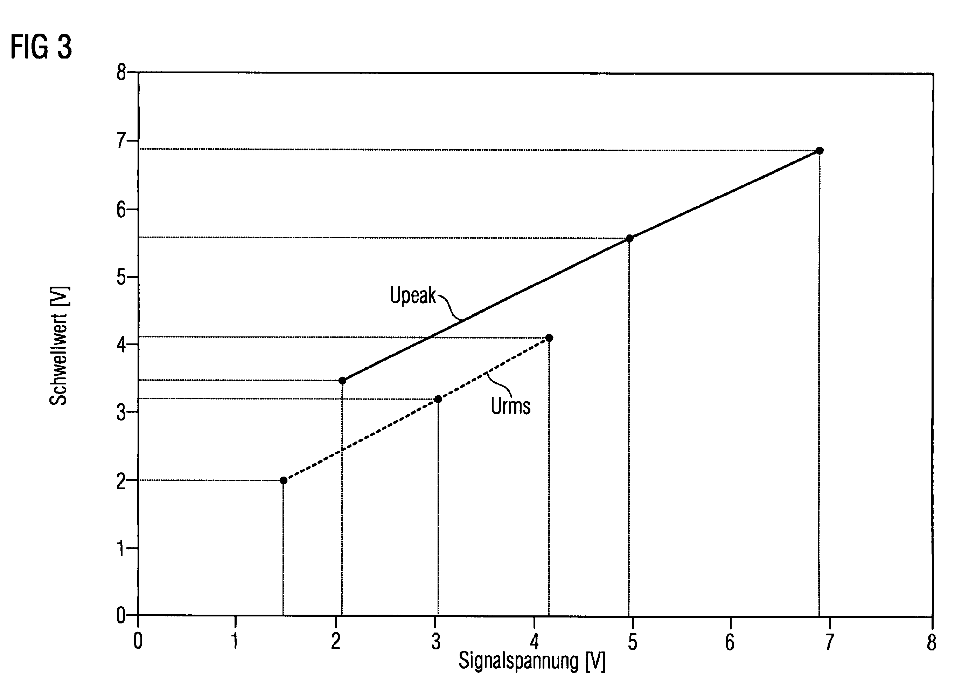

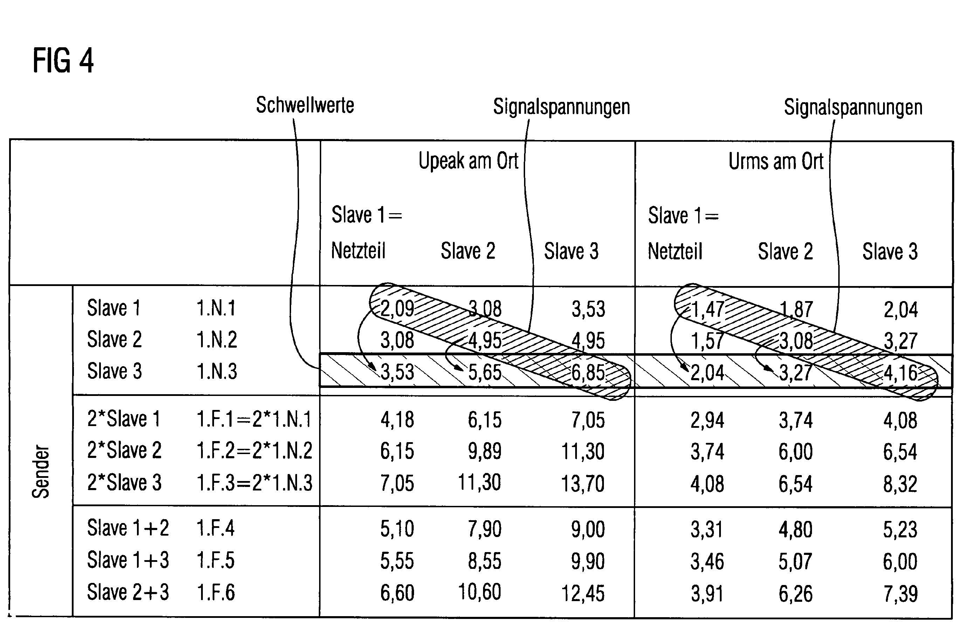

FIG 3 und 4 zeigen beispielhaft für eine 1x100m AS-i Leitung eine mögliche Zuordnung von Schwellwerten zu Spannungsimpulsen, so wie sie in der Look-Up-Tabelle 22 hinterlegt sind und für den Schritt 200 benötigt werden. Diese Zuordnung von Schwellwerten zu Spannungsimpulsen kann gewonnen werden, indem zunächst die innerhalb der jeweiligen Spezifikation erlaubte Bustopologie gewählt wird, bei der die höchsten Signalspannungen auftreten (linke Spalte der Tabelle). Anschließend werden durch Messungen oder Simulationen die Signalspannungen, d.h. die Werte der Spannungsimpulse, an verschiedenen möglichen Busanschlusspunkten bestimmt, die durch Masteraufrufe eines an diesen Punkt angeschlossenen Masters erzeugt werden, welche dann die x-Achse des Diagramms bilden. Des Weiteren wird der maximale Spannungspegel - hier entweder der maximale Spitzen- (Upeak) oder Mittelwert (Urms) - an diesem Ort ermittelt, der durch einen regulären Aufruf eines an beliebiger Stelle innerhalb der Topologie angeschlossenen Slaves erzeugt wird. Diese ergeben dann die auf der y-Achse aufgetragenen für jede Signalspannung entsprechenden Schwellwerte.

Der in FIG 1 skizzierte Master M umfasst vorzugsweise eine als separater Baustein ausgeführte Überwachungseinrichtung 20 mit einem Mikrocontroller 21 mit integriertem A/D-Wandler, der das AS-i-Signal am Eingang des Masters M für den Mikrocontroller aufbereitet. Zudem weist diese Überwachungseinrichtung 20 einen Speicher 22 auf, in dem die Lock-Up-Tabelle (Verweistabelle) hinterlegt ist. Das zuvor beschriebene Verfahren wird nun im Mikrocontroller 21 des Überwachungsbausteins 20 ausgeführt, indem auch auf die in der Lock-Up-Tabelle hinterlegten Informationen zurückgegriffen wird. Je nach Größe des gemessenen Spannungsimpulses aus dem Masteraufruf wird somit ein Schwellwert ausgewählt, der dann mit der Spannungsimpulsgröße der Slaveantwort verglichen wird. Das Ergebnis wird dann über 23 an die CPU 10 des Masters M zur Weiterverarbeitung weitergegeben. Im vorliegenden Fall, bei dem die Überwachungseinrichtung 20 direkt im Master M angeordnet ist, kann so das Ergebnis der Überwachung auf einfachsten Weg ohne weiteren Übertragungsaufwand an die übergeordnete Steuerung 40 gemeldet werden. Wird zudem vom Mikrocontroller (CPU) 10 über 24 die Adresse des aktuell angesprochenen Slaves an die Überwachungseinrichtung 20 weitergegeben, so kann diese gleich mit dem Ergebnis der Überwachungseinrichtung verknüpft werden, was die Lokalisierung der fehlerhaft adressierten Slaves vereinfacht.

Die Erfindung ist aber nicht beschränkt auf das zuvor beschriebene Ausführungsbeispiel, bei dem sich die Überwachung am Ort des Masters M befindet. Vielmehr kann die erfindungsgemäße Überwachungseinrichtung und damit auch das erfindungsgemäße Verfahren an jedem Ort des Aktuator-Sensor-Interface-Netzwerkes eingesetzt werden. Wesentlich dabei ist nur, dass für jeden Ort die netzwerktypischen Einflüsse auf einen Spannungsimpuls bekannt sind, so dass für diesen Ort und für die vorhandene Netzwerktopologie eine normierte Größe vorliegt und somit ein Schwellwert ableitbar ist. Damit kann an jedem Ort einer bestimmten Netzwerktopografie ein Spannungswert unterhalb des zugeordneten Schwellwertes eindeutig einem Spannungsimpuls eines einzelnen Slaves zugeordnet werden, oder bei einem Spannungswert oberhalb auf mehrere gleichzeitige Spannungsimpulse von mehr als einem Slave und damit eine Mehrfachadressierung geschlossen werden. Weiterhin wäre denkbar, dass für den Fall, dass die Überwachungseinrichtung - so wie im Ausführungsbeispiel gezeigt - im Master selbst vorgesehen ist, freie Bereiche des Mikrocontrollers des Masters M selbst zur Überwachung genutzt werden könnten, um so den Hardwareaufwand im Master weiter zu verringern.

## Patentansprüche

1. Verfahren zum Erkennen einer fehlerhaften Mehrfachadressierung eines nach dem Master-Slave-Prinzip arbeitenden Netzwerks, bestehend aus einem Master und einer Anzahl über eine Leitung mit diesem verbundenen Slaves mit folgenden Schritten:
- Messen (100) zumindest eines ersten, durch einen Masteraufruf des Masters generierten Spannungsimpulses an einem Messort der Leitung;
- Ableiten (200) eines Schwellwertes aus diesem zumindest einen Spannungsimpuls und einer zuvor erfolgten Simulation oder Messung aller Ausprägungen des Netzwerks, wobei zu jedem möglichen Spannungsimpulswert eines durch einen Masteraufruf erzeugten Spannungsimpulses an einem Ort des Netzwerkes die für das Netzwerk simulierten oder gemessenen Ausprägungen des Netzwerkes hinerlegt sind;
- Messen (300) zumindest eines ersten weiteren, durch eine Slaveantwort generierten Spannungsimpulses am gleichen Messort, wobei die Slaveantwort von einem mit dem Masteraufruf adressierten Slave als Antwort auf diesen Masteraufruf erzeugt wird;
- Vergleichen (400) dieses zumindest einen weiteren Spannungsimpulses mit dem Schwellwert;
- Erkennen (500) einer fehlerhaften Mehrfachadressierung, wenn der Schwellwert überschritten wird, **dadurch gekennzeichnet, dass** die Ableitung des Schwellenwertes anhand einer Look-up-Tabelle oder einer Näherungsfunktion erfolgt.

2. Verfahren nach Anspruch 1,
**dadurch gekennzeichnet, dass**
sowohl bei dem ersten durch den Masteraufruf generierte Spannungsimpuls als auch bei dem weiteren durch die Slaveantwort generierten Spannungsimpuls ein Spannungsspitzenwert oder Effektivwert gemessen wird.

3. Verfahren nach Anspruch 1,
**dadurch gekennzeichnet, dass**
sowohl über die durch den Masteraufruf generierten Spannungsimpulse als auch über die weiteren durch die Slaveantwort generierten Spannungsimpulse ein Mittelwert gemessen wird.

4. Verfahren nach Anspruch 3,
**dadurch gekennzeichnet, dass**
der Mittelwert über mehrere Spannungsimpulse mehrerer aufeinanderfolgender Masteraufrufe und/oder Slaveantworten gemessen wird.

5. Verfahren nach einem der Ansprüche 1 bis 3,
**dadurch gekennzeichnet , dass**
der Schwellwert bei jedem Masteraufruf neu ermittelt wird.

6. Verfahren nach einem der vorherigen Ansprüche,
**dadurch gekennzeichnet, dass**
eine Meldung ausgegeben wird (600), wenn der Schwellwert überschritten wird.

7. Verfahren nach Anspruch 6,
**dadurch gekennzeichnet, dass**
mit der Meldung auch die Adresse der angesprochenen Slaves gemeldet wird.

8. Verfahren nach einem der Ansprüche 1 bis 7,
**dadurch gekennzeichnet, dass**
der Messort sich am Ort des Masters (M) befindet.

9. Aktuator-Sensor-Interface-Netzwerk mit einem Master (M) und einer Anzahl von, über eine Aktuator-Sensor-Interface-Leitung mit dem Master verbundenen Slaves (S1,S2,...), die jeweils einem oder einer Gruppe von Aktuatoren und/oder Sensoren zugeordnet sind und die in Abhängigkeit von ihrer Adressierung vom Master angesprochen werden,
**dadurch gekennzeichnet, dass**
an einem Ort der Aktuator-Sensor-Interface-Leitung eine Überwachungsvorrichtung (20) vorgesehen ist, die eine nicht erlaubte Zuordnung zumindest zweier Slaves zu einer Adresse im Aktuator-Sensor-Interface-Netzwerk nach einem Verfahren gemäß Anspruch 1 bis 8 erkennt.

## Claims

1. Method for recognising incorrect multiple addressing of a network operating according to the master-slave principle, comprising a master and a number of slaves connected thereto by a cable, comprising the following steps:
- measuring (100) at least one first voltage pulse generated by a master call at a measuring site of the cable;
- deriving (200) a threshold value from this at least one voltage pulse and a previous simulation or measurement of all characteristics of the network, wherein the characteristics of the network simulated or measured for the network are stored at a location of the network for each possible voltage pulse value of a voltage pulse generated by a master call,
- measuring (300) at least one first, additional voltage pulse generated by a slave response at the same site of measurement, wherein the slave response is generated as a response to the master call by a slave addressed by the master call,
- comparing (400) this at least one additional voltage pulse with the threshold value,
- recognising (500) incorrect multiple addressing if the threshold value is exceeded, **characterised in that** the threshold value is derived with the aid of a look-up table or an approximation function.

2. Method according to claim 1,
**characterised in that** a voltage peak or effective value is measured in the case of both the first voltage pulse generated by the master call and the additional voltage pulse generated by the slave response.

3. Method according to claim 1,
**characterised in that** a mean is measured via both the voltage pulse generated by the master call and via the additional voltage pulse generated by the slave response.

4. Method according to claim 3,
**characterised in that** the mean is measured via a plurality of voltage pulses of a plurality of successive master calls and/or slave responses.

5. Method according to any one of claims 1 to 3,
**characterised in that** the threshold value is determined again with every master call.

6. Method according to any one of the preceding claims,
**characterised in that** a message is output (600) if the threshold value is exceeded.

7. Method according to claim 6,
**characterised in that** the address of the addressed slaves is also reported with the message.

8. Method according to any one of claims 1 to 7,
**characterised in that** the measuring site is located at the site of the master (M).

9. Actuator-sensor-interface network comprising a master (M) and a number of slaves (S1, S2,...) connected to the master by an actuator-sensor interface cable, the slaves each being allocated to one or a group of actuator(s) and/or sensor(s) and being addressed by the master as a function of their addressing, **characterised in that** a monitoring device (20) is provided at a site of the actuator-sensor interface cable and this recognises an inadmissible allocation of at least two slaves to an address in the actuator-sensor interface network in accordance with a method according to claims 1 to 8.

## Revendications

1. Procédé de détection d'un adressage multiple incorrect d'un réseau fonctionnant selon le principe maître-esclave, composé d'un maître et d'un nombre d'esclaves reliés à celui-ci par une ligne, comprenant les étapes suivantes :
- mesurer (100) à un endroit de la ligne au moins une première impulsion de tension générée par un appel du maître ;
- déduire (200) une valeur seuil de ladite au moins une impulsion de tension et d'une simulation ou mesure faite au préalable de toutes les particularités du réseau, sachant que pour chaque possible valeur d'impulsion de tension d'une impulsion de tension générée par un appel du maître à un endroit du réseau les particularités du réseau simulées ou mesurées pour le réseau sont mémorisées ;
- mesurer (300) au même endroit au moins une autre première impulsion de tension générée par une réponse de l'esclave, la réponse de l'esclave étant générée par un esclave adressé par l'appel du maître en tant que réponse à cet appel du maître ;
- comparer (400) ladite au moins une autre impulsion de tension avec la valeur seuil ;
- détecter (500) un adressage multiple incorrect lorsque la valeur seuil est dépassée, **caractérisé en ce que** la déduction de la valeur seuil est effectuée à l'aide d'une table de correspondance ou d'une fonction d'approximation.

2. Procédé selon la revendication 1,
**caractérisé en ce que**
une valeur maximale de tension ou valeur efficace est mesurée aussi bien pour la première impulsion de tension générée par l'appel du maître que pour l'autre impulsion de tension générée par la réponse de l'esclave.

3. Procédé selon la revendication 1,
**caractérisé en ce que**
une moyenne est mesurée aussi bien sur les impulsions de tension générées par l'appel du maître que sur les autres impulsions de tension générées par la réponse de l'esclave.

4. Procédé selon la revendication 3,
**caractérisé en ce que**
la moyenne est mesurée sur plusieurs impulsions de tension de plusieurs appels consécutifs du maître et/ou plusieurs réponses consécutives de l'esclave.

5. Procédé selon l'une des revendications 1 à 3,
**caractérisé en ce que**
la valeur seuil est recalculée à chaque appel du maître.

6. Procédé selon l'une des revendications précédentes,
**caractérisé en ce que**
un message est délivré (600) lorsque la valeur seuil est dépassée.

7. Procédé selon la revendication 6,
**caractérisé en ce que**
le message signale en même temps aussi l'adresse des esclaves appelés.

8. Procédé selon l'une des revendications 1 à 7,
**caractérisé en ce que**
l'endroit des mesures se trouve à l'endroit du maître (M).

9. Réseau à interface capteur-actionneur comprenant un maître (M) et un nombre d'esclaves (S1, S2) reliés au maître par une ligne à interface capteur-actionneur, lesquels esclaves sont associés chacun à un seul ou à un groupe d'actionneurs et/ou capteurs et sont appelés par le maître en fonction de leur adressage,
**caractérisé en ce que**
à un endroit de la ligne à interface capteur-actionneur est prévu un dispositif de contrôle (20), qui détecte une affectation non autorisée d'au moins deux esclaves à une adresse dans le réseau à interface capteur-actionneur suivant un procédé selon les revendications 1 à 8.
